# EUROPEAN PATENT SPECIFICATION

(11) **EP 4 161 151 B1**
(45) Date of publication and mention of the grant of the patent: **26.06.2024**
(21) Application number: 20944102.1
(22) Date of filing: 06.07.2020
(51) Int. Cl.: H04W 36/00, H04W 36/18, H04W 76/19, H04W 24/02, H04W 24/04

(54) **WIRELESS COMMUNICATION METHODS, TERMINAL DEVICE, AND NETWORK DEVICE**
DRAHTLOSKOMMUNIKATIONSVERFAHREN, ENDGERÄTEVORRICHTUNG UND NETZWERKVORRICHTUNG
PROCÉDÉS DE COMMUNICATION SANS FIL, DISPOSITIF TERMINAL ET DISPOSITIF DE RÉSEAU

(43) Date of publication of application: 05.04.2023
(73) Proprietor: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN)
(74) Representative: Taor, Simon Edward William
(86) International application number: PCT/CN2020/100488
(87) International publication number: WO 2022/006719

(56) References cited:
- WO-A1-2020/088592
- WO-A1-2021/232202
- CN-A- 111 328 118
- US-A1- 2014 148 174
- US-A1- 2020 314 716
- HUAWEI ET AL: "Considerations on control plane for DAPS", 3GPP DRAFT; R2-1913205 CONSIDERATIONS ON CONTROL PLANE FOR DAPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chongqing, China; 20191014 - 20191018 4 October 2019 (2019-10-04), XP051791217, Retrieved from the Internet: URL:http://www.3gpp.org/ftp/tsg_ran/WG2_RL 2/TSGR2_107bis/Docs/R2-1913205.zip [retrieved on 2019-10-04]
- VIVO: "Summary of Email Discussion on CP for DAPS", 3GPP DRAFT; R2-1912349 SUMMARY OF EMAIL DISCUSSION ON CP FOR DAPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Chongqing, China; 20191014 - 20191018 4 October 2019 (2019-10-04), XP051790395, Retrieved from the Internet: URL:http://www.3gpp.org/ftp/tsg_ran/WG2_RL 2/TSGR2_107bis/Docs/R2-1912349.zip [retrieved on 2019-10-04]
- ERICSSON: "Control plane handling during the RUDI handover procedure", 3GPP DRAFT; R2-1912358 - CONTROL PLANE HANDLING DURING RUDI HO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chongqing, China; 20191010 - 20191014 3 October 2019 (2019-10-03), XP051790404, Retrieved from the Internet: URL:http://www.3gpp.org/ftp/tsg_ran/WG2_RL 2/TSGR2_107bis/Docs/R2-1912358.zip [retrieved on 2019-10-03]
- vivo: "Summary of Email Discussion on CP for DAPS", 3GPP TSG-RAN WG2 MEETING #107BIS; R2-1912349, 3rd Generation Partnership Project (3GPP), Sophia-Antipolis Cedex ; France, 4 October 2019 (2019-10-04), XP051790395, Chongqing, China; 20191014 - 20191018
- Huawei, HiSilicon, China Telecom: "Considerations on control plane for DAPS", 3GPP TSG-RAN WG2 MEETING #107BIS ; R2-1913205, 3rd Generation Partnership Project (3GPP), Sophia-Antipolis Cedex ; France, no. - 20191018, 4 October 2019 (2019-10-04), XP051791217, Chongqing, China; 20191014 - 20191018
- Ericsson: "Control plane handling during the RUDI handover procedure", 3GPP TSG-RAN WG2 MEETING #107BIS; R2-1912358 , 3rd Generation Partnership Project (3GPP), Sophia-Antipolis Cedex ; France, 3 October 2019 (2019-10-03), XP051790404, Chongqing, China; 20191010 - 20191014

## Description

### TECHNICAL FIELD

The embodiments of the present disclosure relate to communication technology, and more particularly, to a wireless communication method, a terminal device and a network device.

### BACKGROUND

In New Radio (NR) and Long Term Evolution (LTE) systems, Dual Active Protocol Stack (DAPS) is introduced to optimize a handover process to reduce interruption time in the handover process. However, it is still not clear how to deal with a Radio Link Failure (RLF) of a source cell in a DAPS handover process, which affects the DAPS handover. 3GPP Draft, R2-1913205, discloses considerations on control plane for DAPS. 3GPP Draft, R2-1912349 discusses certain CP issues of DAPS.

### SUMMARY

Embodiments of the present disclosure provide wireless communication methods, a terminal device, and a network device. The terminal device can report an occurrence of RLF in a source cell in a DAPS handover process, such that the network device can optimize a threshold corresponding to a measurement event in a measurement configuration, thereby ensuring the effectiveness of the subsequent DAPS handover configuration and optimizing the DAPS handover.

A first aspect of the invention comprises a wireless communication method as set forth in claim 1. The method includes: transmitting, by a terminal device, first indication information to a network device. The first indication information indicates that an RLF occurs between the terminal device and a source cell in a handover process of the terminal device from the source cell to a target cell using a DAPS handover scheme. The network device is a network device of the target cell. The first indication information includes a measurement result of a measurement performed by the terminal device for the DAPS handover. The first indication information includes a type value. The type value indicates that a type of an RLF report reported by the terminal device is an RLF report of the RLF occurring in the source cell during the DAPS handover.

A second aspect of the invention comprises a wireless communication method as set forth in claim 11.

The method includes: receiving, by a network device, first indication information transmitted by a terminal device. The first indication information indicates that an RLF occurs between the terminal device and a source cell in a handover process of the terminal device from the source cell to a target cell using a DAPS handover scheme. The network device is a network device of the target cell. The first indication information includes a measurement result of a measurement performed by the terminal device for the DAPS handover. The first indication information includes a type value. The type value indicates that a type of an RLF report reported by the terminal device is an RLF report of the RLF occurring in the source cell during the DAPS handover.

A third aspect of the invention comprises a terminal device as set forth in claim 12. The terminal device includes a processor and a memory. The memory stores a computer program which, when executed by the processor, causes the terminal device to perform the method according to the above first aspect.

A fourth aspect of the invention comprises a network device as set forth in claim 13. The network device includes a processor and a memory. The memory stores a computer program which, when executed by the processor, causes the network device to perform the method according to the above second aspect.

With the above technical solutions, the terminal device can report an occurrence of RLF in a source cell in a DAPS handover process, such that the network device can optimize a threshold corresponding to a measurement event in a measurement configuration, thereby ensuring the effectiveness of the subsequent DAPS handover configuration and optimizing the DAPS handover.

### BRIEF DESCRIPTION OF DRAWINGS

FIG. 1 is a schematic diagram showing a communication system architecture according to an embodiment of the present disclosure.
FIG. 2 is a schematic diagram showing a too late handover according to an embodiment of the present disclosure.
FIG. 3 is a schematic diagram showing a handover to a wrong cell according to an embodiment of the present disclosure.
FIG. 4 is a schematic flowchart illustrating a wireless communication method according to an embodiment of the present disclosure.
FIG. 5 is a schematic block diagram of a terminal device according to an embodiment of the present disclosure.
FIG. 6 is a schematic block diagram of a network device according to an embodiment of the present disclosure.
FIG. 7 is a schematic block diagram of a communication device according to an embodiment of the present disclosure.
Fig. 8 is a schematic block diagram of an apparatus according to an embodiment of the present disclosure.
FIG. 9 is a schematic block diagram of a communication system according to an embodiment of the present disclosure.

### DESCRIPTION OF EMBODIMENTS

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may be applied to a Carrier Aggregation (CA) scenario, a Dual Connectivity (DC) scenario, a Standalone (SA) network deployment scenario, and the like.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may refer to a User Equipment (UE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

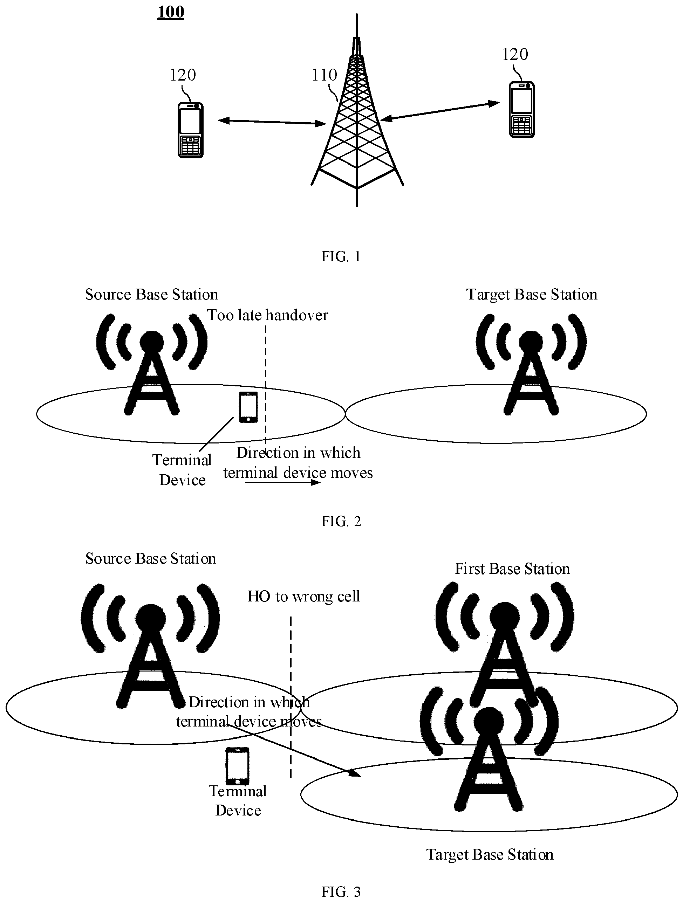

Exemplarily, a communication system 100 in which an embodiment of the present disclosure can be applied is schematically shown in FIG. 1. The communication system 100 may include a network device 110 which may be a device communicating with a terminal device 120 (or referred to as communication terminal or terminal). The network device 110 may provide communication coverage for a particular geographic area, and may communicate with terminal devices located within the coverage.

FIG. 1 exemplarily shows one network device and two terminal devices. Optionally, the communication system 100 may include multiple network devices, and the coverage of each network device may include other numbers of terminal devices. The embodiment of the present disclosure is not limited to this.

Optionally, the communication system 100 may also include other network entities such as a network controller or a Mobility Management Entity (MME). The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the network device 110 and the terminal device 120 with communication functions. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the 3^{rd} Generation Partnership Project (3GPP) mobility enhancement related researches (including LTE and NR), a DAPS optimization method for reducing interruption time during handover has been proposed. The main idea is that during the handover, the terminal device can maintain protocol stacks of both a source cell and a target cell. After receiving a DAPS handover command, the terminal device can maintain a connection with the source cell and initiates a synchronization process/random access to the target cell. When the synchronization process/random access is completed, the terminal device will perform handover for uplink data, i.e., the uplink data transmission of the terminal device will be handed over from a source base station side to a target base station side after random access. The release of the protocol stack of the source base station after random access is based on an explicit instruction from the network, i.e., during the period from the random access to the release of the connection with the source base station side, the terminal device can normally receive downlink data transmitted by the source cell, and information related to e.g., uplink feedback of the downlink data may be transmitted to the source cell.

For DAPS handover, during the period when the terminal device initiates random access to the target cell, the terminal device will keep monitoring the radio link with the source cell. If the link with the source cell fails, the terminal device will release the connection with the source cell and stop transmitting/receiving data to/from the source cell. In addition, if the DAPS handover fails, the terminal device fails to access the target cell, and no radio link failure occurs in the source cell, the terminal device can switch back to the connection with the source cell, thereby avoiding a Radio Resource Control (RRC) connection reestablishment process caused by DAPS handover failure.

On the other hand, the terminal device will keep monitoring the radio link with the source cell while accessing the target cell. If Radio Link Failure (RLF) occurs in the source cell while the terminal device is accessing the target cell (when the terminal device initiates a random access process towards the target cell), the terminal device will release the source cell and will not initiate a connection reestablishment process.

In the DAPS handover process, the problem of too late handover may occur. As shown in FIG. 2, an RLF occurs between the terminal device and the source cell. In this case, the terminal device selects the target cell with a cell selection process, and initiates a reestablishment process. After the reestablishment, the terminal device can transmit an RLF report to the target base station. The target base station transmits a failure indication to the source base station through an Xn interface, the failure indication including the RLF report. The source base station finds that the cause for the handover failure is that the handover is too late. Further, the source base station can change the threshold setting of the measurement target corresponding to the terminal measurement report event, so as to ensure that the subsequent DAPS handover goes properly.

During the DAPS handover process, a problem of handover to a wrong cell may occur. As shown in FIG. 3, an RLF occurs after the terminal device successfully accesses the target cell or a handover failure occurs during the process of accessing the target cell, and the terminal device selects a cell other than the target cell and the source cell with a cell selection process, e.g., a first cell (served by a first base station), to initiate a reestablishment process. After the reestablishment, the terminal transmits an RLF report to the first base station, and the first base station transmits a failure indication to the target base station through an Xn interface, the failure indication including the RLF report. The target base station finds that this is a problem of handover to a wrong cell. Further, the target base station transmits a handover report containing a handover report type of 'HO to a wrong cell' to the source base station, such that the source base station can change the threshold setting of the measurement target corresponding to the terminal measurement report event.

It should be noted that the main purpose of DAPS handover is to allow the data exchange interruption time between the terminal and the network to reach 0 ms. If a radio link failure (RLF) occurs in the source cell while the terminal device is accessing the target cell (when the terminal device initiates a random access process towards the target cell), the terminal device releases the source cell and does not initiate a connection reestablishment process. In this case, since the terminal device has not successfully accessed the target cell, but the direct data transmission and reception between the terminal device and the source cell is interrupted, the interruption time of 0 ms cannot be guaranteed.

Based on the above problem, the present disclosure provides a solution for dealing with a radio link failure (RLF) between a terminal device and a source cell during a DAPS handover. The terminal device can report an occurrence of RLF in a source cell in a DAPS handover process, such that the network device can optimize a threshold corresponding to a measurement event in a measurement configuration, thereby ensuring the effectiveness of the subsequent DAPS handover configuration and optimizing the DAPS handover.

The technical solutions of the present disclosure will be described in detail below with reference to specific embodiments.

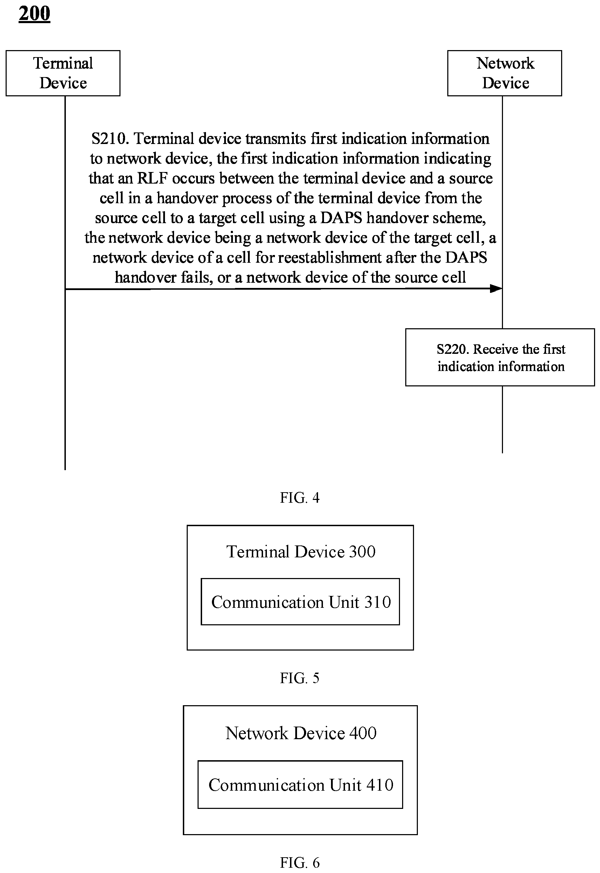

FIG. 4 is a schematic flowchart illustrating a wireless communication method 200 according to an embodiment of the present disclosure. As shown in FIG. 4, the method 200 may include at least part of the following contents.

At S210, a terminal device transmits first indication information to a network device. The first indication information indicates that an RLF occurs between the terminal device and a source cell in a handover process of the terminal device from the source cell to a target cell using a DAPS handover scheme. The network device is a network device of the target cell, a network device of a cell for reestablishment after the DAPS handover fails, or a network device of the source cell.

At S220, the network device receives the first indication information transmitted by the terminal device.

It should be noted that, in the embodiment of the present disclosure, the network device may be a base station or an access network device. In addition, the cell for reestablishment after the DAPS handover fails may be a cell other than the source cell and the target cell.

In the embodiment of the present disclosure, in the DAPS handover process, during the period when the terminal device initiates random access towards the target cell, the terminal device will keep monitoring the radio link with the source cell. After the RLF occurs between the terminal device and the source cell, the terminal device transmits the first indication information to the network device. Further, the network device can determine that the terminal device has experienced the RLF of the source cell during the DAPS handover based on the first indication information. That is, in this case, the DAPS handover configuration cannot guarantee that the terminal device can maintain normal communication with the source cell before successfully accessing the target cell. Further, after the source cell learns that it has experienced the RLF during the DAPS handover, it can optimize and adjust the threshold corresponding to the measurement event in the measurement configuration for the related frequency point in the DAPS handover process of the terminal device, thereby ensuring the effectiveness of the subsequent DAPS handover configuration and optimizing the DAPS handover.

After the target cell obtains the first indication information, i.e., after the target cell learns that the terminal device has experienced the RLF of the source cell during the DAPS handover, the target cell may forward the first indication information to the source cell, or the target cell may indicate to the source cell that the terminal device has experienced the RLF of the source cell during the DAPS handover. Therefore, the source cell can optimize and adjust the threshold corresponding to the measurement event in the measurement configuration for the related frequency point in the DAPS handover process of the terminal device, thereby ensuring the effectiveness of the subsequent DAPS handover configuration and optimizing the DAPS handover.

After the cell for reestablishment after the DAPS handover fails obtains the first indication information, that is, after the cell for reestablishment after the DAPS handover fails learns that the terminal device has experienced the RLF of the source cell during the DAPS handover, the cell for reestablishment after the DAPS handover fails can forward the first indication information to the target cell, and the target cell can analyze the cause of the failure of the DAPS handover, and indicate to the source cell that the terminal device has experienced the RLF of the source cell during the DAPS handover. Therefore, the source cell can optimize and adjust the threshold corresponding to the measurement event in the measurement configuration for the related frequency point in the DAPS handover process of the terminal device, thereby ensuring the effectiveness of the subsequent DAPS handover configuration and optimizing the DAPS handover.

After the cell for reestablishment after the DAPS handover fails obtains the first indication information, that is, after the cell for reestablishment after the DAPS handover fails learns that the terminal device has experienced the RLF of the source cell during the DAPS handover, the cell for reestablishment after the DAPS handover fails can forward the first indication information to the source cell. Therefore, the source cell can optimize and adjust the threshold corresponding to the measurement event in the measurement configuration for the related frequency point in the DAPS handover process of the terminal device, thereby ensuring the effectiveness of the subsequent DAPS handover configuration and optimizing the DAPS handover.

In addition, in the embodiment of the present disclosure, the failure of the DAPS handover may refer to the terminal device failing to access the target cell, or the terminal device successfully accessing the target cell and the RLF occurs between the terminal device and the target cell.

Optionally, in an embodiment of the present disclosure, the first indication information may be an RLF report. Of course, the first indication information may be some other information, and the present disclosure is not limited to this.

The first indication information includes a type value.

The type value indicates that a type of an RLF report reported by the terminal device is an RLF report of the RLF occurring in the source cell during the DAPS handover.

Alternatively, the type value may indicate that the type of the RLF report reported by the terminal device is an RLF report of the RLF occurring in the source cell during the DAPS handover and the terminal device successfully accessing the target cell.

Alternatively, the type value may indicate that the type of the RLF report reported by the terminal device is an RLF report of the RLF occurring in the source cell during the DAPS handover and the terminal device failing to access the target cell.

Optionally, when the first indication information is an RLF report:
the type value indicates that the RLF report is an RLF report of the RLF occurring in the source cell during the DAPS handover.
Alternatively, the type value may indicate that the RLF report is an RLF report of the RLF occurring in the source cell during the DAPS handover and the terminal device successfully accessing the target cell; or
the type value may indicate that the RLF report is an RLF report of the RLF occurring in the source cell during the DAPS handover and the terminal device failing to access the target cell.

For example, when the network device is the network device of the target cell, the type value indicates that the RLF report is an RLF report of the RLF occurring in the source cell during the DAPS handover.

In another example, when the network device is the network device of the target cell, the type value may indicate that the RLF report is an RLF report of the RLF occurring in the source cell during the DAPS handover and the terminal device successfully accessing the target cell.

In yet another example, when the network device is the network device of the cell for reestablishment after the DAPS handover fails, the type value may indicate that the RLF report is an RLF report of the RLF occurring in the source cell during the DAPS handover and the terminal device failing to access the target cell.

Optionally, in some embodiments, the first indication information may include first information, where the first information is used to indicate that RLF occurs in the source cell during the DAPS handover process.

For example, the first information occupies X bits, and the bit value of the first information indicating that the RLF occurs in the source cell in the DAPS handover process.

Optionally, the first information may indicate at least one of:
a timer for monitoring a network channel quality expires during execution of the DAPS handover at the source cell;
a random access fails during execution of the DAPS handover at the source cell;
a lower layer reports a random access problem of the source cell during execution of the DAPS handover at the source cell;
a number of Radio Link Control (RLC) retransmissions at the source cell reaches a maximum number of retransmissions during execution of the DAPS handover at the source cell;
a beam failure recovery fails at the source cell during execution of the DAPS handover at the source cell; or
the RLF occurs during execution of the DAPS handover at the source cell.

Optionally, the first information may be a cause field, which may indicate that the RLF occurs in the source cell during the DAPS handover process or indicate the cause of the RLF in the source cell during the DAPS handover process.

That is, the cause field may include, but not limited to, at least one of:
a timer for monitoring a network channel quality expires during execution of the DAPS handover at the source cell (t310-Expiry);
a random access fails during execution of the DAPS handover at the source cell;
a lower layer reports a random access problem (randomAccessProblem) of the source cell during execution of the DAPS handover at the source cell;
a number of Radio Link Control (RLC) retransmissions at the source cell reaches a maximum number of retransmissions (rlc-MaxNumRetx) during execution of the DAPS handover at the source cell;
a beam failure recovery fails at the source cell during execution of the DAPS handover at the source cell (beamFailureRecoveryFailure); or
the RLF occurs during execution of the DAPS handover at the source cell.

It should be noted that the timer used to monitor the network channel quality may be, for example, T310. The timer is started when the terminal device receives n consecutive out-of-sync indications, and if the timer expires, it is considered that an RLF has occurred.

In addition, the lower layer reporting the random access problem of the source cell may refer to e.g., a Media Access Control (MAC) layer reporting the random access problem of the source cell to an RRC layer.

Optionally, when the first indication information is an RLF report, the RLF report may include a cause field (rlf-Cause-r16), and a possible configuration of the cause field (rlf-Cause-r16) in the RLF report can be as follows:

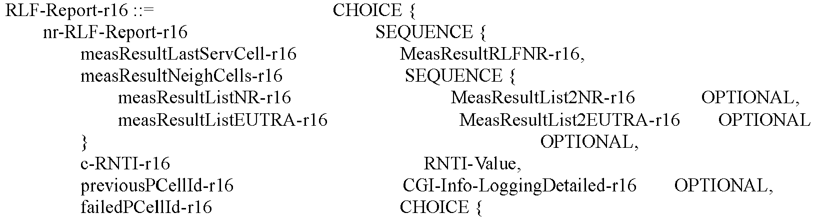

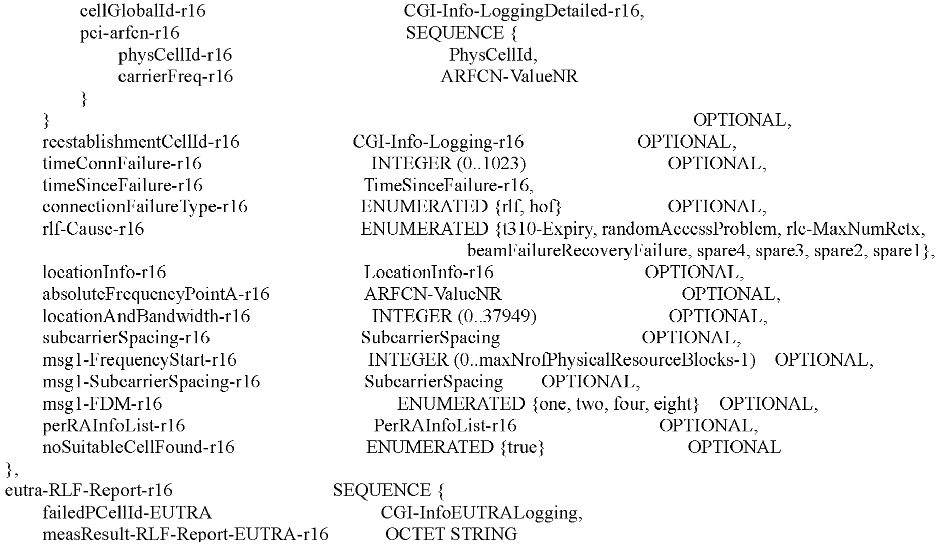

It should be noted that, in the embodiment of the present disclosure, information other than the cause field (rlf-Cause-r16) in the above RLF report (RLF-Report-r16) may be information in some existing standards, and details thereof will be omitted here.

In an embodiment of the present disclosure, the above cause field may also be referred to as a cause value or a cause information field, and the present disclosure is not limited to any of these examples.

The first indication information includes a measurement result of a measurement performed by the terminal device for the DAPS handover. Thus, the network device can make an adjustment to the measurement result accordingly, thereby optimizing the DAPS handover.

For example, when the first indication information is an RLF report, the measurement result of the measurement performed by the terminal device for the DAPS handover as included in the RLF report may be a variable value recently measured by the terminal device, such as a value of a variable radio link failure report (VarRLF-Report). The measurement in the case may refer to a measurement made for the DAPS handover, including e.g., channel measurement, beam measurement, cell measurement, interference measurement, and the like.

In the embodiment of the present disclosure, the variable value recently measured by the terminal device can be carried in the RLF report for reporting, such that the source cell can optimize the measurement reporting threshold accordingly when configuring the DAPS handover in the subsequent process, so as to avoid data interruption in the DAPS handover process due to early disconnection from the source cell.

It should be noted that the RLF report may further include some other information. For example, the RLF report may further include: a geographic location of the terminal device when the RLF occurs, a source cell identifier, a target cell identifier, etc., and the present disclosure is not limited to this.

Optionally, in the embodiment of the present disclosure, when the terminal device successfully accesses the target cell and the RLF occurs in the source cell during the DAPS handover, the terminal device transmits the first indication information to the network device of the target cell. In this case, further, after receiving the first indication information, the target cell can forward the first indication information to the source cell, or the target cell can indicate to the source cell that the terminal device has experienced the RLF of the source cell during the DAPS handover. Therefore, the source cell can optimize and adjust the threshold corresponding to the measurement event in the measurement configuration for the related frequency point in the DAPS handover process of the terminal device, thereby avoiding data interruption due to early disconnection from the source cell during the DAPS handover process, ensuring the effectiveness of the subsequent DAPS handover configuration and optimizing the DAPS handover.

Optionally, in the embodiment of the present disclosure, when the terminal device fails to access the target cell and the RLF occurs in the source cell during the DAPS handover, the terminal device transmits the first indication information to the network device of the cell for reestablishment after the DAPS handover fails. In this case, further, the cell for reestablishment after the DAPS handover fails may forward the first indication information to the target cell and/or the source cell. For example, the cell for reestablishment after the DAPS handover fails may transmit failure indication information to the target cell, and/or the cell for reestablishment after the DAPS handover fails may transmit failure indication information to the source cell. The failure indication information indicates the failure of the handover of the terminal device from the source cell to the target cell using the DAPS handover scheme.

Optionally, the failure indication information may include at least one of:
a Cell Radio Network Temporary Identity (C-RNTI) allocated by the target cell to the terminal device, a C-RNTI allocated by the source cell to the terminal device, or the first indication information.

Furthermore, after receiving the failure indication information, the target cell can analyze the cause of the failure of the DAPS handover. For example, the target cell analyzes and learns that the cause of the failure of the DAPS handover is HO to wrong cell. After receiving the failure indication information, the target cell can indicate to the source cell that the terminal device has experienced the RLF of the source cell during the DAPS handover. For example, the target cell can transmit a handover report to the source cell, and the type of the handover report is DAPS handover to wrong cell. The handover report indicates that the terminal device has experienced the RLF of the source cell during the DAPS handover. Optionally, after the source cell receives the handover report, it can analyze the cause of the DAPS handover failure, and can optimize and adjust the threshold corresponding to the measurement event in the measurement configuration for the related frequency point in the DAPS handover process of the terminal device, thereby avoiding data interruption due to early disconnection from the source cell during the DAPS handover process, ensuring the effectiveness of the subsequent DAPS handover configuration and optimizing the DAPS handover.

Further, after the source cell receives the failure indication information, it can analyze the cause of the DAPS handover failure, and can optimize and adjust the threshold corresponding to the measurement event in the measurement configuration for the related frequency point in the DAPS handover process of the terminal device, thereby avoiding data interruption due to early disconnection from the source cell during the DAPS handover process, ensuring the effectiveness of the subsequent DAPS handover configuration and optimizing the DAPS handover.

Optionally, in some embodiments, the terminal device may transmit second indication information to the network device before transmitting the first indication information. The second indication information indicates whether there is RLF information and/or DAPS handover failure information in an RLF report reported by the terminal device. For example, the second indication information may be an available RLF information (rlf-InfoAvailable) field, and of course may be some other field, and the present disclosure is not limited to this. Optionally, the second indication information may be represented by a first flag bit, which may be available RLF information (rlf-InfoAvailable).

Optionally, the second indication information may be carried in RRC connection reconfiguration complete (RRCConnectionReconfigurationComplete) information.

Optionally, after receiving the second indication information, the network device may transmit request information to the terminal device, and the request information is used for requesting information from the terminal device. Correspondingly, the terminal device receives the request information transmitted by the network device.

For example, the request information may be terminal information request (UEInformationRequest) signaling.

Optionally, in some embodiments, S210 may include:
transmitting, by the terminal device, response information to the network device, in response to the request information, the response information including the first indication information, e.g., an RLF report.

For example, the response information may be terminal information response (UEinformationResponse) signaling.

Optionally, the request information may include second information indicating whether the terminal device is to report an RLF report. Further, the terminal device may transmit the response information to the network device when the second information is configured as TRUE.

Optionally, the second information may be an RLF report request (rlf-ReportReq) field. Of course, the second information may be some field, and the present disclosure is not limited to this.

Optionally, the second information may be a second flag bit, which indicates whether the terminal device is to report an RLF report. Further, when the second flag bit is configured as TRUE, the terminal device may transmit the response information to the network device. That is, the second flag bit may be an RLF report request (rlf-ReportReq) field.

That is, when the second flag bit is the rlf-ReportReq field, if the rlf-ReportReq field is configured as TRUE, the terminal device is to report the first indication information, e.g., an RLF report.

For example, when the request information includes the second information, e.g., when the terminal information request (UEInformationRequest) signaling includes an RLF report request (rlf-ReportReq) field, a possible configuration of the RLF report request (rlf-ReportReq) field can be as follows:

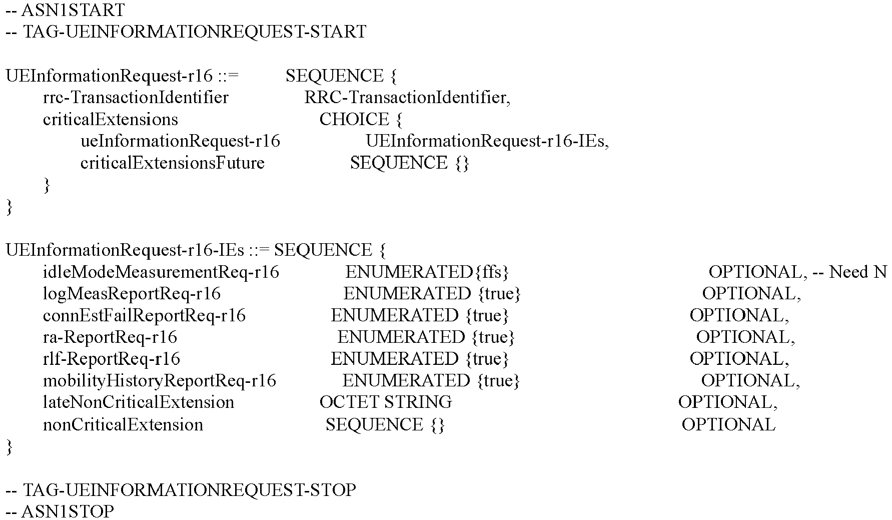

It should be noted that, in an embodiment of the present disclosure, information other than the RLF report request (rlf-ReportReq) field in the above terminal information request (UEInformationRequest) signaling may be information in some existing standards, and details thereof will be omitted here.

Optionally, in an embodiment of the present disclosure, the conditions in which the RLF occurs between the terminal device and the source cell may include, but not limited to, at least one of:
a timer for monitoring a network channel quality expires during execution of the DAPS handover at the source cell;
a random access fails during execution of the DAPS handover at the source cell;
a lower layer reports a random access problem of the source cell during execution of the DAPS handover at the source cell;
a number of Radio Link Control (RLC) retransmissions at the source cell reaches a maximum number of retransmissions during execution of the DAPS handover at the source cell;
a beam failure recovery fails at the source cell during execution of the DAPS handover at the source cell; or
the RLF occurs during execution of the DAPS handover at the source cell.

Therefore, in the embodiment of the present disclosure, the terminal device can report the occurrence of the RLF in the source cell during the DAPS handover process, and the network device can optimize the threshold corresponding to the measurement event in the measurement configuration, thereby ensuring the effectiveness of the subsequent DAPS handover configuration and optimizing the DAPS handover. Specifically, after learning that the RLF occurs in the source cell during the DAPS handover process, the source cell can optimize and adjust the threshold corresponding to the measurement event in the measurement configuration for the related frequency point in the DAPS handover process of the terminal device, thereby avoiding data interruption due to early disconnection from the source cell during the DAPS handover process, ensuring the effectiveness of the subsequent DAPS handover configuration and optimizing the DAPS handover.

The method embodiments of the present disclosure have been described in detail above with reference to FIG. 4, and the apparatus embodiments of the present disclosure will be described in detail below with reference to FIG. 5 to FIG. 9. It should be understood that the apparatus embodiments and the method embodiments correspond to each other, and for similar descriptions, reference can be made to the method embodiments.

FIG. 5 shows a schematic block diagram of a terminal device 300 according to an embodiment of the present disclosure. As shown in FIG. 5, the terminal device 300 includes:
a communication unit 310 configured to transmit first indication information to a network device.

The first indication information indicates that a Radio Link Failure (RLF) occurs between the terminal device and a source cell in a handover process of the terminal device from the source cell to a target cell using a Dual Active Protocol Stack (DAPS) handover scheme. The network device is a network device of the target cell, a network device of a cell for reestablishment after the DAPS handover fails, or a network device of the source cell.

The first indication information includes a type value.

The type value indicates that a type of an RLF report reported by the terminal device is an RLF report of the RLF occurring in the source cell during the DAPS handover.

Optionally, the first indication information may include first information indicating that the RLF occurs in the source cell in the DAPS handover process.

Optionally, the first information may indicate at least one of:
a timer for monitoring a network channel quality expires during execution of the DAPS handover at the source cell;
a random access fails during execution of the DAPS handover at the source cell;
a lower layer reports a random access problem of the source cell during execution of the DAPS handover at the source cell;
a number of Radio Link Control (RLC) retransmissions at the source cell reaches a maximum number of retransmissions during execution of the DAPS handover at the source cell;
a beam failure recovery fails at the source cell during execution of the DAPS handover at the source cell; or
the RLF occurs during execution of the DAPS handover at the source cell.

The first indication information includes a measurement result of a measurement performed by the terminal device for the DAPS handover.

Optionally, the communication unit 310 may be configured to:
transmit the first indication information to the network device of the target cell when the terminal device successfully accesses the target cell and the RLF occurs in the source cell during the DAPS handover.

Optionally, the communication unit 310 may be configured to:
transmit the first indication information to the network device of the source cell via the target cell when the terminal device successfully accesses the target cell and the RLF occurs in the source cell during the DAPS handover.

Optionally, the communication unit 310 may be configured to:
transmit the first indication information to the network device of the cell for reestablishment after the DAPS handover fails when the terminal device fails to access the target cell and the RLF occurs in the source cell during the DAPS handover.

Optionally, the communication unit 310 may be configured to:
transmit the first indication information to the network device of the target cell via the network device of the cell for reestablishment after the DAPS handover fails and/or to the network device of the source cell via the network device of the cell for reestablishment after the DAPS handover fails, when the terminal device fails to access the target cell and the RLF occurs in the source cell during the DAPS handover.

Optionally, the communication unit 310 may be further configured to transmit second indication information to the network device before transmitting the first indication information, the second indication information indicating whether there is RLF information and/or DAPS handover failure information in an RLF report reported by the terminal device.

Optionally, the second indication information may be an available RLF information, rlf-InfoAvailable, field.

Optionally, the communication unit 310 may be configured to:
receive request information transmitted by the network device, the request information being used for requesting information from the terminal device; and
transmit response information for the request information to the network device, the response information including the first indication information.

Optionally, the request information may include second information indicating whether the terminal device is to report an RLF report, and the communication unit 310 may be configured to: transmit the response information to the network device when the second information is configured as TRUE.

Optionally, the second information may be an RLF report request, rlf-ReportReq, field.

Optionally, the first indication information may be an RLF report.

Optionally, in some embodiments, the above communication unit may be a communication interface or a transceiver, or an input/output interface of a communication chip or a system-on-chip.

It should be understood that the terminal device 300 according to the embodiment of the present disclosure may correspond to the terminal device in the method embodiment of the present disclosure, and the above and other operations and/or functions of the respective units in the terminal device 300 are provided for the purpose of implementing the process flow corresponding to the terminal device in the method 200 shown in FIG. 3, and details thereof will be not omitted here for brevity.

FIG. 6 shows a schematic block diagram of a network device 400 according to an embodiment of the present disclosure. As shown in FIG. 6, the network device 400 includes:
a communication unit 410 configured to receive first indication information transmitted by a terminal device.

The first indication information indicates that a Radio Link Failure (RLF) occurs between the terminal device and a source cell in a handover process of the terminal device from the source cell to a target cell using a Dual Active Protocol Stack (DAPS) handover scheme. The network device is a network device of the target cell.

The first indication information includes a type value. The type value indicates that a type of an RLF report reported by the terminal device is an RLF report of the RLF occurring in the source cell during the DAPS handover.

Optionally, the first indication information may include first information indicating that the RLF occurs in the source cell in the DAPS handover process.

Optionally, the first information may indicate at least one of:
a timer for monitoring a network channel quality expires during execution of the DAPS handover at the source cell;
a random access fails during execution of the DAPS handover at the source cell;
a lower layer reports a random access problem of the source cell during execution of the DAPS handover at the source cell;
a number of Radio Link Control (RLC) retransmissions at the source cell reaches a maximum number of retransmissions during execution of the DAPS handover at the source cell;
a beam failure recovery fails at the source cell during execution of the DAPS handover at the source cell; or
the RLF occurs during execution of the DAPS handover at the source cell.

The first indication information includes a measurement result of a measurement performed by the terminal device for the DAPS handover.

Optionally, the communication unit 410 may be further configured to forward the first indication information to the source cell when the network device is the network device of the target cell.

Optionally, the communication unit 410 may be further configured to transmit failure indication information to the target cell and/or the source cell when the network device is the network device of the cell for reestablishment after the DAPS handover fails. The failure indication information indicates a failure of a handover of the terminal device from the source cell to the target cell using the DAPS handover scheme.

Optionally, the failure indication information may include at least one of:
a Cell Radio Network Temporary Identity (C-RNTI) allocated by the target cell to the terminal device, a C-RNTI allocated by the source cell to the terminal device, or the first indication information.

Optionally, the communication unit 410 may be further configured to receive second indication information transmitted by the terminal device before receiving the first indication information. The second indication information indicates whether there is RLF information and/or DAPS handover failure information in an RLF report reported by the terminal device.

Optionally, the second indication information may be an available RLF information, rlf-InfoAvailable, field.

Optionally, the communication unit 410 may be configured to:
transmit request information to the terminal device, the request information being used for requesting information from the terminal device; and
receive response information for the request information as transmitted by the terminal device, the response information including the first indication information.

Optionally, the request information may include second information indicating whether the terminal device is to report an RLF report, and the communication unit 410 may be configured to: receive the response information transmitted by the terminal device when the second information is configured as TRUE.

Optionally, the second information may be an RLF report request, rlf-ReportReq, field.

Optionally, the first indication information may be an RLF report.

Optionally, in some embodiments, the above communication unit may be a communication interface or a transceiver, or an input/output interface of a communication chip or a system-on-chip.

It should be understood that the network device 400 according to the embodiment of the present disclosure may correspond to the network device in the method embodiment of the present disclosure, and the above and other operations and/or functions of the respective units in the network device 400 are provided for the purpose of implementing the process flow corresponding to the network device in the method 200 shown in FIG. 4, and details thereof will be not omitted here for brevity.

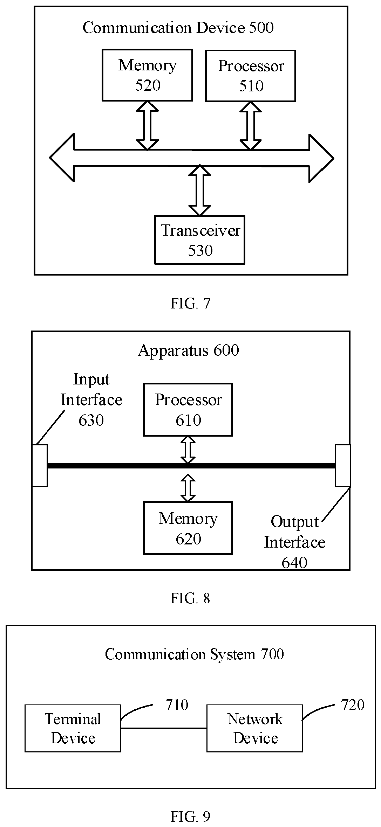

FIG. 7 is a schematic diagram showing a structure of a communication device 500 according to an embodiment of the present disclosure. The communication device 500 shown in FIG. 7 includes a processor 510, and the processor 510 can invoke and execute a computer program from a memory to implement the method in the embodiment of the present disclosure.

Optionally, as shown in FIG. 7, the communication device 500 may further include a memory 520. The processor 510 can invoke and execute a computer program from the memory 520 to implement the method in the embodiment of the present disclosure.

The memory 520 may be a separate device independent from the processor 510, or may be integrated in the processor 510.

Optionally, as shown in FIG. 7, the communication device 500 may further include a transceiver 530, and the processor 510 may control the transceiver 530 to communicate with other devices, and in particular, transmit information or data to other devices, or receive information or data transmitted by other devices.

Here, the transceiver 530 may include a transmitter and a receiver. The transceiver 530 may further include one or more antennas.

Optionally, the communication device 500 may specifically be the network device according to the embodiment of the present disclosure, and the communication device 500 may implement the corresponding processes implemented by the network device in any of the methods according to the embodiments of the present disclosure. For the sake of brevity, details thereof will be omitted here.

Optionally, the communication device 500 may specifically be the mobile terminal/terminal device according to the embodiment of the present disclosure, and the communication device 500 may implement the corresponding processes implemented by the mobile terminal/terminal device in any of the methods according to the embodiments of the present disclosure. For the sake of brevity, details thereof will be omitted here.

FIG. 8 is a schematic diagram showing a structure of an apparatus according to an embodiment of the present disclosure. The apparatus 600 shown in FIG. 8 includes a processor 610, and the processor 610 can invoke and execute a computer program from a memory to implement the method in the embodiment of the present disclosure.

Optionally, as shown in FIG. 8, the apparatus 600 may further include a memory 620. The processor 610 can invoke and execute a computer program from the memory 620 to implement the method in the embodiment of the present disclosure.

The memory 620 may be a separate device independent from the processor 610, or may be integrated in the processor 610.

Optionally, the apparatus 600 may further include an input interface 630. The processor 610 can control the input interface 630 to communicate with other devices or chips, and in particular, obtain information or data transmitted by other devices or chips.

Optionally, the apparatus 600 may further include an output interface 640. The processor 610 can control the output interface 640 to communicate with other devices or chips, and in particular, output information or data to other devices or chips.

Optionally, the apparatus can be applied to the network device in the embodiment of the present disclosure, and the apparatus can implement the corresponding processes implemented by the network device in the various methods of the embodiments of the present disclosure. For the sake of brevity, details thereof will be omitted here.

Optionally, the apparatus can be applied to the mobile terminal/terminal device in the embodiment of the present disclosure, and the apparatus can implement the corresponding processes implemented by the mobile terminal/terminal device in the various methods of the embodiments of the present disclosure. For the sake of brevity, details thereof will be omitted here.

Optionally, the apparatus in the embodiment of the present disclosure may be a chip, and the chip may also be referred to as a system-level chip, a system-chip, a chip system, or a system-on-chip.

FIG. 9 is a schematic block diagram showing a communication system 700 according to an embodiment of the present disclosure. As shown in FIG. 9, the communication system 700 includes a terminal device 710 and a network device 720.

Here, the terminal device 710 can be configured to implement the corresponding functions implemented by the terminal device in the above method, and the network device 720 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

Optionally, the computer readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the mobile terminal/terminal device in the embodiment of the present disclosure, and the computer program instructions can cause a computer to perform corresponding procedures implemented by the mobile terminal/terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

Optionally, the computer program can be applied to the mobile terminal/terminal device in the embodiment of the present disclosure. The computer program, when executed on a computer, can cause the computer to perform corresponding procedures implemented by the mobile terminal/terminal device in the method according to any of the embodiments of the present disclosure. Details thereof will be omitted here for simplicity.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

## Claims

1. A wireless communication method, comprising:
transmitting (S210), by a terminal device, first indication information to a network device, wherein
the first indication information indicates that a Radio Link Failure, RLF, occurs between the terminal device and a source cell in a handover process of the terminal device from the source cell to a target cell using a Dual Active Protocol Stack, DAPS, handover scheme, the network device being a network device of the target cell,
the first indication information comprises a measurement result of a measurement performed by the terminal device for the DAPS handover,
**characterized in that** the first indication information comprises a type value, wherein
the type value indicates that a type of an RLF report reported by the terminal device is an RLF report of the RLF occurring in the source cell during the DAPS handover.

2. The method according to claim 1, wherein the first indication information comprises first information indicating that the RLF occurs in the source cell in the DAPS handover process.

3. The method according to claim 2, wherein the first information indicates at least one of:
a lower layer reports a random access problem of the source cell during execution of the DAPS handover at the source cell; or
a number of Radio Link Control, RLC, retransmissions at the source cell reaches a maximum number of retransmissions during execution of the DAPS handover at the source cell.

4. The method according to any one of claims 1 to 3, wherein said transmitting (S210), by the terminal device, the first indication information to the network device comprises:
transmitting, by the terminal device, the first indication information to the network device of the target cell when the terminal device successfully accesses the target cell and the RLF occurs in the source cell during the DAPS handover.

5. The method according to any one of claims 1 to 4, further comprising:
transmitting, by the terminal device, second indication information to the network device before transmitting the first indication information, the second indication information indicating whether there is RLF information and/or DAPS handover failure information in an RLF report reported by the terminal device.

6. The method according to claim 5, wherein the second indication information is an available RLF information, rlf-InfoAvailable, field.

7. The method according to claim 5 or 6, wherein said transmitting (S210), by the terminal device, the first indication information to the network device comprises:
receiving, by the terminal device, request information transmitted by the network device, the request information being configured to request information from the terminal device; and
transmitting, by the terminal device, response information for the request information to the network device, the response information comprising the first indication information.

8. The method according to claim 7, wherein the request information comprises second information indicating whether the terminal device is to report the RLF report, and
wherein said transmitting, by the terminal device, the response information for the request information to the network device comprises:
transmitting, by the terminal device, the response information to the network device when the second information is configured as TRUE.

9. The method according to claim 8, wherein the second information is an RLF report request, rlf-ReportReq, field.

10. The method according to any one of claims 1 to 9, wherein the first indication information is an RLF report.

11. A wireless communication method, comprising:
receiving (S220), by a network device, first indication information transmitted by a terminal device, wherein
the first indication information indicates that a Radio Link Failure, RLF, occurs between the terminal device and a source cell in a handover process of the terminal device from the source cell to a target cell using a Dual Active Protocol Stack, DAPS, handover scheme, the network device being a network device of the target cell,
the first indication information comprises a measurement result of a measurement performed by the terminal device for the DAPS handover,
**characterized in that** the first indication information comprises a type value, wherein
the type value indicates that a type of an RLF report reported by the terminal device is an RLF report of the RLF occurring in the source cell during the DAPS handover.

12. A terminal device (300), comprising a processor (510) and a memory (520), wherein the memory (520) has a computer program stored thereon which, when executed by the processor, causes the terminal device (300) to perform the method according to any of claims 1 to 10.

13. A network device (400), comprising a processor (510) and a memory (520), wherein the memory (520) has a computer program stored thereon which, when executed by the processor, causes the network device (400) to perform the method according to claim 11.

## Patentansprüche

1. Drahtloskommunikationsverfahren, umfassend:
Übertragen (S210), durch eine Endgerätevorrichtung, einer ersten Anzeigeinformation an eine Netzwerkvorrichtung, wobei
die erste Anzeigeinformation anzeigt, dass ein Funkverbindungsfehler (Radio Link Failure, RLF) zwischen der Endgerätevorrichtung und einer Quellzelle in einem Übergabeprozess der Endgerätevorrichtung von der Quellzelle zu einer Zielzelle unter Verwendung eines Übergabeschemas mit zwei aktiven Protokollstapeln (Dual Active Protocol Stack, DAPS) auftritt, wobei die Netzwerkvorrichtung eine Netzwerkvorrichtung der Zielzelle ist,
die erste Anzeigeinformation ein Messergebnis einer Messung ist, die von der Endgerätevorrichtung für die DAPS-Übergabe durchgeführt wird,
**dadurch gekennzeichnet, dass** die erste Anzeigeinformation einen Typwert umfasst, wobei der Typwert anzeigt, dass ein Typ eines RLF-Berichts, der von der Endgerätevorrichtung gemeldet wird, ein RLF-Bericht über den RLF ist, der in der Quellzelle während der DAPS-Übergabe auftritt.

2. Verfahren nach Anspruch 1, wobei die erste Anzeigeinformation eine erste Information umfasst, die anzeigt, dass der RLF in der Quellzelle im DAPS-Übergabeprozess auftritt.

3. Verfahren nach Anspruch 2, wobei die erste Information mindestens eines der Folgenden anzeigt:
eine untere Schicht meldet ein Direktzugriffsproblem der Quellzelle während der Ausführung der DAPS-Übergabe an der Quellzelle; oder
eine Anzahl von Neuübertragungen der Funkverbindungssteuerung (Radio Link Control, RLC) an der Quellzelle erreicht eine maximale Anzahl von Neuübertragungen während der Ausführung der DAPS-Übergabe an der Quellzelle.

4. Verfahren nach einem der Ansprüche 1 bis 3, wobei das Übertragen (S210), durch die Endgerätevorrichtung, der ersten Anzeigeinformation an die Netzwerkvorrichtung umfasst:
Übertragen, durch die Endgerätevorrichtung, der ersten Anzeigeinformation an die Netzwerkvorrichtung der Zielzelle, wenn die Endgerätevorrichtung erfolgreich auf die Zielzelle zugreift und der RLF in der Quellzelle während der DAPS-Übergabe auftritt.

5. Verfahren nach einem der Ansprüche 1 bis 4, ferner umfassend:
Übertragen, durch die Endgerätevorrichtung, einer zweiten Anzeigeinformation an die Netzwerkvorrichtung, bevor die erste Anzeigeinformation übertragen wird, wobei die zweite Anzeigeinformation anzeigt, ob eine RLF-Information und/oder eine DAPS-Übergabefehlerinformation in einem von der Endgerätevorrichtung gemeldeten RLF-Bericht vorhanden ist.

6. Verfahren nach Anspruch 5, wobei die zweite Anzeigeinformation ein verfügbares Feld einer RLF-Information (rlf-InfoAvailable) ist.

7. Verfahren nach Anspruch 5 oder 6, wobei das Übertragen (S210), durch die Endgerätevorrichtung, der ersten Anzeigeinformation an die Netzwerkvorrichtung umfasst:
Empfangen, durch die Endgerätevorrichtung, der Anforderungsinformation, die von der Netzwerkvorrichtung übertragen wird, wobei die Anforderungsinformation konfiguriert ist, um Informationen von der Endgerätevorrichtung anzufordern; und
Übertragen, durch die Endgerätevorrichtung, einer Antwortinformation auf die Anforderungsinformation an die Netzwerkvorrichtung, wobei die Antwortinformation die erste Anzeigeinformation umfasst.

8. Verfahren nach Anspruch 7, wobei die Anforderungsinformation eine zweite Information umfasst, die anzeigt, ob die Endgerätevorrichtung den RLF-Bericht melden soll, und
wobei das Übertragen, durch die Endgerätevorrichtung, der Antwortinformation auf die Anforderungsinformation an die Netzwerkvorrichtung umfasst:
Übertragen, durch die Endgerätevorrichtung, der Antwortinformation an die Netzwerkvorrichtung, wenn die zweite Information als WAHR konfiguriert ist.

9. Verfahren nach Anspruch 8, wobei die zweite Information ein Feld für die RLF-Berichtsanforderung (rlf-ReportReq) ist.

10. Verfahren nach einem der Ansprüche 1 bis 9, wobei die erste Anzeigeinformation ein RLF-Bericht ist.

11. Drahtloskommunikationsverfahren, umfassend:
Empfangen (S220), durch eine Netzwerkvorrichtung, einer ersten Anzeigeinformation, die von einer Endgerätevorrichtung übertragen wird, wobei
die erste Anzeigeinformation anzeigt, dass ein Funkverbindungsfehler (RLF) zwischen der Endgerätevorrichtung und einer Quellzelle in einem Übergabeprozess der Endgerätevorrichtung von der Quellzelle zu einer Zielzelle unter Verwendung eines Übergabeschemas mit zwei aktiven Protokollstapeln (DAPS) auftritt, wobei die Netzwerkvorrichtung eine Netzwerkvorrichtung der Zielzelle ist,
die erste Anzeigeinformation ein Messergebnis einer Messung ist, die von der Endgerätevorrichtung für die DAPS-Übergabe durchgeführt wird,
**dadurch gekennzeichnet, dass** die erste Anzeigeinformation einen Typwert umfasst, wobei der Typwert anzeigt, dass ein Typ eines RLF-Berichts, der von der Endgerätevorrichtung gemeldet wird, ein RLF-Bericht über den RLF ist, der in der Quellzelle während der DAPS-Übergabe auftritt.

12. Endgerätevorrichtung (300), umfassend einen Prozessor (510) und einen Speicher (520), wobei im Speicher (520) ein Computerprogramm gespeichert ist, das bei Ausführung durch den Prozessor die Endgerätevorrichtung (300) veranlasst, das Verfahren nach einem der Ansprüche 1 bis 10 durchzuführen.

13. Netzwerkvorrichtung (400), umfassend einen Prozessor (510) und einen Speicher (520), wobei im Speicher (520) ein Computerprogramm gespeichert ist, das bei Ausführung durch den Prozessor die Netzwerkvorrichtung (400) veranlasst, das Verfahren nach Anspruch 11 durchzuführen.

## Revendications

1. Procédé de communication sans fil, comprenant :
la transmission (S210), par un dispositif terminal, de premières informations d'indication à un dispositif de réseau, dans lequel
la première information d'indication indique qu'une défaillance de liaison radio, RLF, se produit entre le dispositif terminal et une cellule source dans un processus de transfert du dispositif terminal de la cellule source à une cellule cible à l'aide d'un schéma de transfert de pile de protocole active double, DAPS, le dispositif de réseau étant un dispositif de réseau de la cellule cible,
la première information d'indication comprend un résultat de mesure d'une mesure réalisée par le dispositif terminal pour le transfert DAPS,
**caractérisé en ce que** la première information d'indication comprend une valeur type, dans lequel la valeur type indique qu'un type d'un rapport RLF rapporté par le dispositif terminal est un rapport RLF de la RLF se produisant dans la cellule source pendant le transfert DAPS.

2. Procédé selon la revendication 1, dans lequel la première information d'indication comprend des premières informations indiquant que la RLF se produit dans la cellule source dans le processus de transfert DAPS.

3. Procédé selon la revendication 2, dans lequel la première information d'indication indique au moins l'un de ce qui suit :
une couche inférieure rapporte un problème d'accès aléatoire de la cellule source pendant l'exécution du transfert DAPS au niveau de la cellule source ; ou
un nombre de retransmissions de commande de liaison radio, RLC, au niveau de la cellule source atteint un nombre maximal de retransmissions pendant l'exécution du transfert DAPS au niveau de la cellule source.

4. Procédé selon l'une quelconque des revendications 1 à 3, dans lequel ladite transmission (S210), par le dispositif terminal, des premières informations d'indication au dispositif de réseau comprend :
la transmission, par le dispositif terminal, des premières informations d'indication au dispositif de réseau de la cellule cible lorsque le dispositif terminal accède avec succès à la cellule cible et que la RLF se produit dans la cellule source pendant le transfert DAPS.

5. Procédé selon l'une quelconque des revendications 1 à 4, comprenant en outre :
la transmission, par le dispositif terminal, de secondes informations d'indication au dispositif de réseau avant la transmission des premières informations d'indication, les secondes informations d'indication indiquant s'il y a des informations RLF et/ou des informations de défaillance de transfert DAPS dans un rapport RLF rapporté par le dispositif terminal.

6. Procédé selon la revendication 5, dans lequel la seconde information d'indication est un champ d'informations RLF disponibles, rlf-InfoAvailable.

7. Procédé selon la revendication 5 ou 6, dans lequel ladite transmission (S210), par le dispositif terminal, des premières informations d'indication au dispositif de réseau comprend :
la réception, par le dispositif terminal, d'informations de demande transmises par le dispositif de réseau, l'information de demande étant configurés pour demander des informations à partir du dispositif terminal ; et
la transmission, par le dispositif terminal, d'informations de réponse pour les informations de demande au dispositif de réseau, l'information de réponse comprenant les premières informations d'indication.

8. Procédé selon la revendication 7, dans lequel l'information de demande comprend des secondes informations indiquant si le dispositif terminal doit rapporter le rapport RLF, et
dans lequel ladite transmission, par le dispositif terminal, des informations de réponse pour les informations de demande au dispositif de réseau comprend :
la transmission, par le dispositif terminal, des informations de réponse au dispositif de réseau lorsque les secondes informations sont configurées comme TRUE.

9. Procédé selon la revendication 8, dans lequel la seconde information est un champ de demande de rapport RLF, rlf-ReportReq.

10. Procédé selon l'une quelconque des revendications 1 à 9, dans lequel la première indication de formation est un rapport RLF.

11. Procédé de communication sans fil, comprenant :
la réception (S220), par un dispositif de réseau, de premières informations d'indication transmises par un dispositif terminal, dans lequel
la première information d'indication indique qu'une défaillance de liaison radio, RLF, se produit entre le dispositif terminal et une cellule source dans un processus de transfert du dispositif terminal de la cellule source à une cellule cible à l'aide d'un mode de transfert de pile de protocole active double, DAPS, le dispositif de réseau étant un dispositif de réseau de la cellule cible,
la première information d'indication comprend un résultat de mesure d'une mesure réalisée par le dispositif terminal pour le transfert DAPS,
**caractérisé en ce que** la première information d'indication comprend une valeur type, dans lequel la valeur type indique qu'un type d'un rapport RLF rapporté par le dispositif terminal est un rapport RLF de la RLF se produisant dans la cellule source pendant le transfert DAPS.

12. Dispositif terminal (300), comprenant un processeur (510) et une mémoire (520), dans lequel la mémoire (520) a un programme informatique stocké sur celle-ci qui, lorsqu'il est exécuté par le processeur, amène le dispositif terminal (300) à réaliser le procédé selon l'une quelconque des revendications 1 à 10.

13. Dispositif de réseau (400), comprenant un processeur (510) et une mémoire (520), dans lequel la mémoire (520) a un programme informatique stocké sur celle-ci qui, lorsqu'il est exécuté par le processeur, amène le dispositif de réseau (400) à réaliser le procédé selon la revendication 11.
